(19) Europäisches Patentamt

European Patent Office

Office européen des brevets

(11) **EP 0 773 120 A2**

(12) **EUROPÄISCHE PATENTANMELDUNG**

(43) Veröffentlichungstag:
14.05.1997 Patentblatt 1997/20

(51) Int. Cl.⁶: **B60G 17/015**, B60G 9/02

(21) Anmeldenummer: 96116384.7

(22) Anmeldetag: 12.10.1996

(84) Benannte Vertragsstaaten:
DE FR GB IT

(30) Priorität: 10.11.1995 DE 19541823

(71) Anmelder: SAME S.p.A.
I-24047 Treviglio (Bergamo) (IT)

(72) Erfinder: Rittmann, Udo
45475 Mühlheim a.d. Ruhr (DE)

(74) Vertreter: Nau, Walter, Dipl.-Ing.
c/o Klöckner-Humboldt-Deutz AG,
Patentwesen PR-P
51057 Köln (DE)

(54) **Feder- und Dämpfungssystem für die Vorderachse eines Ackerschleppers**

(57) Die Erfindung betrifft ein Fahrzeug, insbesondere ein land- oder bauwirtschaftliches Fahrzeug, zumindest mit einer über eine Lenkeranordnung gegenüber dem Fahrzeug federbar gelagerten Achse, insbesondere einer Vorderachse, wobei zumindest zur Federung zwischen dem Fahrzeug (Fahrzeugaufbau) und der Lenkeranordnung zumindest ein Stellzylinder angeordnet ist.

Die der Erfindung zugrundeliegende Aufgabe ist dadurch gelöst, daß Mittel zur Dämpfung der Bewegung der Achse vorgesehen sind.

**Beschreibung**

Die Erfindung betrifft ein Fahrzeug, insbesondere ein land- oder bauwirtschaftliches Fahrzeug, mit einer über eine Lenkeranordnung gegenüber dem Fahrzeug federnd und pendelnd gelagerten Achse (3), inbesondere Vorderachse, wobei die Federung zwischen dem Fahrzeug (Aufbau 2) und der Achse (3) verbundenen Lenker sperrbar ist.

Ein solches Fahrzeug ist aus der DE- 42 35 264 (Anmeldetag: 20.10.1992) bekannt. Hierin ist eine Achsanlenkung vorgeschlagen, mit der eine Blockierung der Achsfederung unter Beibehaltung der Achspendelung möglich ist, wobei die Federung mittels Blattfedern realisiert ist. Diese Achsanlenkung ist aufwendig und erfordert Blattfedern für die Federung und zumindest einen Hydraulikzylinder für die Blockierung der Federung.

Die Blockierung der Federung beim Betrieb auf dem Feld ist zufriedenstellend, es hat sich jedoch herausgestellt, daß für Fahrten auf Straßen die Federung mittels Blattfedern den heutigen Komfortansprüchen nicht mehr genügt. Denn durch "Nicken" um die Querachse, das von Fahrbahnunebenheiten angeregt wird, sinkt die dynamische Aufstandskraft an der Achse zeitweise auf ein kritisches Niveau ab, was zu einem unkontrollierten Fahrverhalten führt, da die übertragbaren Lenk- und Bremskräfte direkt von der Achslast abhängen. Dieser Effekt wird durch den Anbau von Arbeitsgeräten noch erheblich verstärkt.

Der Erfindung liegt daher die Aufgabe zugrunde, ein Fahrzeug mit einer über eine Lenkeranordnung federnd und pendelnd gelagerten Achse bereitzustellen, die konstruktiv einfach ist und hohen Komfortansprüchen genügt, sowie zu einer Erhöhung der Fahrsicherheit durch verbesserten Bodenkontakt der Räder an der Achse bei unterschiedlichen Fahrzuständen führt.

Diese Aufgabe ist erfindungsgemäß dadurch gelöst, daß die Federung zumindest einen Stellzylinder (1) und zumindest einen mit diesem in Wirkverbindung stehenden Druckspeicher 7 aufweist und daß Mittel zur Dämpfung der Federbewegung der Achse vorgesehen sind. Dadurch wird erreicht, daß sich ein derartiges Fahrzeug komfortabel über Straßen bewegen läßt, wodurch den hohen Komfortanforderungen Genüge getan ist. Denn zusätzlich zu der schon bekannten Federung steht eine Dämpfung der Achse zur Verfügung, so daß sich die Bewegungen der Achse federn und dämpfen lassen. Dies ist beispielsweise dann von Vorteil, wenn die Achse die Vorderachse ist und an dem Fahrzeug ein Anbaugerät am Heck angeordnet ist, bei dem beispielsweise durch Unebenheiten der Straße und der Grobstolligkeit der Reifen Schwingungen hervorgerufen werden, die durch dieses aktive Federungs- und Dämpfungssystem weitestgehend elliminiert werden, so daß sich bei dem Fahrer eines solchen Fahrzeuges ein im wesentlichen gleichmäßiger Fahreindruck einstellt und die Fahrsicherheit erhöht ist.

Das erfindungsgemäß vorgeschlagene Federungs- und Dämpfungssystem ist durch die folgende Differentialgleichung zu beschreiben:

$$m \cdot y'' + k \cdot y' + c \cdot y = 0$$

Bei dieser Differentialgleichung handelt es sich um eine homogene Differentialgleichung der zweiten Ordnung, wobei die Koeffizienten m, k und c vom System abhängig, vorgebbar und konstant sind. Das erfindungsgemäße Federungs- und Dämpfungssystem befindet sich im Gleichgewicht, wenn sich die drei obengenannten Summanden der Gleichung zu Null addieren, d.h., daß sich die Beschleunigungskraft, die Dämpfungskraft sowie die Federkraft gegenseitig aufheben. Da sich die Beschleunigungskraft aufgrund der von außen vorgegebenen Einflüsse nicht beeinflussen läßt, ist eine Regelung der Dämpfungskraft und/oder der Federkraft denkbar. Dabei kann es in Abhängigkeit von dem System des Fahrzeuges ausgewählt werden, ob diese beiden Kräfte jeweils alleine oder beide zusammen geregelt werden sollen. Eine konstruktive Ausführungsform ist in den Unteransprüchen angegeben und im Rahmen der Figurenbeschreibung erläutert.

So ist in Weiterbildung der Erfindung vorgesehen, daß als Mittel zur Dämpfung ein zwischen dem Stellzylinder und dem Druckspeicher angeordnetes Drosselventil vorgesehen ist. Die Federkraft läßt sich mittels des Druckes im Druckspeicher einstellen, während die Dämpfung mit dem Drosselventil vorgegeben werden kann. Bei dem Druckspeicher handelt es sich in vorteilhafter Weise um einen Hydrogasspeicher, dessen Gasvolumen variiert werden kann.

Um die Dämpfungskraft nach Bedarf und in Abhängigkeit der äußeren Einflüsse einstellen zu können, ist in Weiterbildung der Erfindung vorgesehen, daß das Drosselventil steuer- oder regelbar ist, insbesondere auf elektromagnetische Art und Weise. Diese Steuerung bzw. Regelung kann manuell oder automatisch erfolgen.

Zu diesem Zweck ist in Weiterbildung der Erfindung ein Sensor zur Erfassung der Bewegung der Achse vorgesehen, der mit einer Steuereinheit in Verbindung steht, die das Drosselventil steuert oder regelt. So ist ein Vorschlag gemacht, um die Dämpfung in Abhängigkeit von äußeren Einflüssen zu regeln. Bei dem Sensor zur Erfassung der Bewegung der Achse kann es sich beispielsweise um einen Wegsensor handeln, der den Weg (Auslenkung der Lenkeranordnung) der Achse erfaßt. Weitere Ausführungsformen, um die Bewegung der Achse zu erfassen, sind selbstverständlich denkbar. Die Steuereinheit weist intern eine Recheneinheit auf, die zumindest zur Verarbeitung eines Signales des Sensors ausgebildet ist, wobei dieses Signal und ggfs. weitere Signale zur Berechnung der eingangs genannten Differentialgleichung herangezogen werden. In Abhängigkeit der Lösung der Differentialgleichung wird das Drosselventil gesteuert bzw. geregelt.

In Ergänzung zu der Federung und der Dämpfung der Achse sind in Weiterbildung der Erfindung Mittel zur Sperrung des Stellzylinders vorgesehen. Dies ist dann erforderlich, wenn das Fahrzeug die Straße verläßt, so daß eine Blockierung der Federung erforderlich wird, um die Steuerung bzw. Regelung der Hydraulik am Heck des Fahrzeuges unabhängig von Federeinflüssen besser ausgestalten zu können. Dabei sind die Mittel zur Sperrung des Stellzylinders derart auszugestalten, daß beispielsweise für den Fall, daß das Fahrzeug mit seinem Frontbereich ausgehoben wird (dies kann beispielsweise dann der Fall sein, wenn ein angebauter Pflug auf einen sehr großen Widerstand stößt), die Achse in ihrer gesperrten Lage verharrt und nicht bei einer Aufwärtsbewegung des Vorderendes des Fahrzeuges eine Abwärtsbewegung vollführt. Die Sperrung kann auch dadurch erfolgen, daß der Druckraum des Stellzylinders entleert und der Hydraulikraum auf der Gegenseite nach dessen Füllung gesperrt wird.

In Weiterbildung der Erfindung ist vorgesehen, daß der Stellzylinder, insbesondere der Druckraum des Stellzylinders nachfüllbar ist. Dies ist erforderlich, wenn aufgrund von Verschmutzungen oder anderen Ursachen Undichtigkeiten auftreten, wodurch Druckflüssigkeit verloren wird. Zu diesem Zweck kann der Druckseite des Federungs- und Dämpfungssystemes ein Drucksensor zugeordnet werden, der für den Fall, daß im Federungs- oder Dämpfungsfall oder auch im Falle, daß die Achse blockiert ist, in Abhängigkeit der vorliegenden Bedingung einen Druckwert erfaßt und diesen bei Abweichung von vorgebbaren Werten korrigiert durch Zufuhr von Druckflüssigkeit. Die Befüllung des Druckraumes dient auch der Aufhebung der Sperrung der Federung aus der abgesenkten Stellung (Endleerstellung).

In Weiterbildung der Erfindung ist zur Einstellung einer konstanten Federung die Druckvorspannung des Druckspeichers konstant, während andererseits zur Erreichung einer veränderbaren Federung die Druckvorspannung ebenfalls veränderbar ist.

Weitere Ausgestaltungen der Erfindung und ein konkretes Ausführungsbeispiel ist in den Figur gezeigt und im folgenden erläutert.

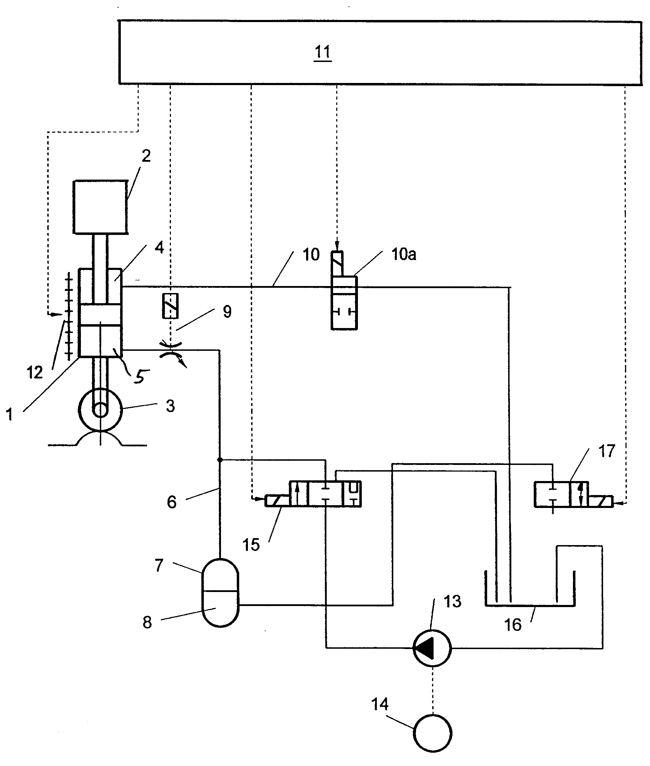

Bei einem nicht gezeigten landwirtschaftlichen Fahrzeug (Ackerschlepper) ist die Vorderachse, die angetrieben sein kann, an einem Drehpunkt pendelnd gelagert aufgehängt. Diese Pendellagerung wird ergänzt durch eine Lenkeranordnung (beispielsweise Querlenker, Längslenker oder Schwinge oder Parallelogrammführung), die über mindestens einen Stellzylinder (Hydraulikzylinder) zum Vorderende des Fahrzeuges abgestützt wird. Ein solcher Stellzylinder ist in der Figur mit der Bezugsziffer 1 bezeichnet. Dieser Stellzylinder 1 ist zwischen einem Aufbau 2 des nicht gezeigten Fahrzeuges und einer vereinfacht dargestellten und mit der Bezugsziffer 3 bezeichneten Achse 3 angeordnet. Der Stellzylinder 1 weist einen Hydraulikraum 4 und einen weiteren Druckraum 5 auf, wobei der letztgenannte über eine Druckleitung 6 mit einem Druckspeicher 7 verbunden ist. Die Federwirkung des Systemes wird durch den Druckspeicher 7 (Hydrogasspeicher) erreicht, der ein Teilvolumen des Druckraumes 5 bei Bewegung des Stellzylinder 1 aufnehmen. Der Druckspeicher 7 weist eine Druckvorspannung 8 auf, bei der es sich um ein Gasvolumen handelt.

Zur Erreichung der Dämpfung der Achse 3 ist in der Druckleitung 6 ein Drosselventil 9 angeordnet, das als elektromagnetisch arbeitendes Drosselventil ausgebildet ist. Mit der Bezugsziffer 10 ist eine Leckleitung bezeichnet, in der ein Sperrventil 10a eingebaut ist.

Das Drosselventil 9 wird von einer Steuereinheit 11 gesteuert, die zu diesem Zweck mit einem Sensor 12 verschaltet ist, der die Bewegung des Stellzylinders 1 (also des Zylinderplungers) aufnimmt. Neben der hier beschriebenen linearen Wegaufnahme kann der Sensor 12 auch beispielsweise zur Aufnahme von Winkelgrößen ausgestaltet sein.

Weiterhin sind in dieser Figur noch eine Pumpe 13, die von einem Motor 14 antreibbar ist, gezeigt, wobei der Motor 14 von der Steuereinheit 11 ein- bzw. ausschaltbar ist. Die Druckleitung 6, also allgemein die Druckseite des Systems, kann über ein Ventil 15, das ebenfalls von der Steuereinheit 11 schaltbar ist, mit zusätzlicher Druckflüssigkeit (Hydrauliköl) aus einem Reservoir 16 versorgt werden oder drucklos mit dem Reservoir 16 verbunden sein. Ergänzend ist noch in der Figur gezeigt, daß ein Ventil 17 vorgesehen ist, das ebenfalls von der Steuereinheit 11 schaltbar ist, um die Druckvorspannung 8 zur Beeinflussung der Federung zu erhöhen oder zu vermindern. Diese Beeinflussung kann manuell oder auch automatisch in Abhängigkeit von Betriebsbedingungen des Fahrzeuges erfolgen.

Das in der Figur gezeigte System arbeitet wie folgt: Die Federung wird dadurch erreicht, daß die Bewegungen der Achse 3 über den Stellzylinder 1 (bzw. dessen nicht näher bezeichneter Plunger) gegen den in der Druckleitung 6 bzw. den in dem Druckspeicher 7 herrschenden Druck wirken. Dieser Druck wird dadurch, daß die Druckflüssigkeit nicht kompressibel ist, an die kompressibel Druckvorspannung 8, bei der es sich um eine Gasblase handelt, weitergegeben, wodurch diese komprimiert wird und die Federung erreicht wird. In Abhängigkeit des von dem Sensor 12 erfaßten Weges (Auslenkung) wird, nachdem die Druckvorspannung bekannt ist, die Differentialgleichung gelöst und in Abhängigkeit des berechneten Wertes für die Dämpfungskraft diese Dämpfungskraft mittels des Drosselventiles 9 eingestellt. Für den Fall, daß Leckagen aufgetreten sind, kann die Druckleitung 6 bzw. der Druckspeicher 7 durch Einschalten des Motors 14 und daraus resultierend der Betätigung der Pumpe 13 nach Schalten des Ventiles 15 in Durchlaßrichtung der Verlust ausgeglichen werden. Zur Vereinfachung geschieht dieser Vorgang stationär, wobei bei einer bestimmten Stellung des Stellzylinders 11 ein bestimmter Druck in der Druckleitung 6 zu herrschen hat, der erfaßbar ist. Weicht dieser Druck von dem Sollwert ab, kann Druckflüssigkeit über das Ventil 15 aus dem Reservoir 16 zugefügt werden. Zum Zwecke der Blockierung wird das Ventil 15 geöffnet, so daß die Druckleitung 6 bzw. der Druckspeicher 7 weitestgehend drucklos ist, wodurch die Achse 3 aufgrund des Gewichtes des Aufbaus 2 über die Lenkeranordnung an diesen automatisch anschlägt. Damit ist die Druckvorspannung 8 wirkungslos und es wird eine Blockierung erreicht. Um die Achse in dieser Stellung zu halten, damit verhindert wird, daß bei einem "Aufbäumen" des Aufbaus 2 die Achse "durchsackt", also sich von dem Aufbau 2 wegbewegt, wird das Sperrventil 10a geschlossen.

Es sei noch darauf hingewiesen, daß sich das erfindungsgemäße System auf konstruktiv unterschiedlich gestaltete federbare und pendelbare Achsen anwenden läßt, wobei diese konstruktiven Ausgestaltungen von untergeordneter Bedeutung sind. Weiterhin kann das erfindungsgemäße System mit einem, mit zwei oder auch mit mehreren Stellzylindern arbeiten, die nicht unbedingt als Hydraulikzylinder, sondern auch als pneumatisch wirkende Zylinder ausgebildet sein können. In vorteilhafter Weise ist es vorzusehen, daß der Druckspeicher so dicht wie möglich an dem Stellzylinder angeordnet wird, um die Ansprechzeit kurz zu halten. Wenn es die konstruktiven Gegebenheiten erlauben, kann der Druckspeicher direkt mit dem Stellzylinder verbunden werden. Es ist auch denkbar, für jeden Stellzylinder einen eigenen Druckspeicher einzusetzen.

Damit bei unterschiedlicher Beladung immer der maximale Kolbenweg nach oben und unten verfügbar ist, sorgt die Regelung für die Mittelstellung des Kolbens im Stellzylinder 1. Diese Regelung soll allerdings nicht auf Fahrbahnunebenheiten ansprechen, sondern die Eintauchtiefe der Vorderachse bei unterschiedlicher Beladung sowie bei Undichtigkeiten ausgleichen. Darüber hinaus soll sie den Übergang zwischen gefederter und abgesenkter (ungefederten) Vorderachsstellung steuern.
Für die Auslegung der erforderlichen Ventile muß ein Kompromiß zwischen Einstellgenauigkeit und Schnelligkeit gefunden werden. Die Einregelung der Kolbenstellung sollte ohne Takten der Ventile erfolgen (Geräuschentwicklung, max. Schalthäufigkeit).

In der statischen Mittellage wird je nach Achslast das Gas in dem Hydrospeicher entsprechend stark vorgespannt.

**Patentansprüche**

1. Fahrzeug, insbesondere land- oder bauwirtschaftliches Fahrzeug, mit einer über eine Lenkeranordnung gegenüber dem Fahrzeug federnd und pendelnd gelagerten Achse (3), inbesondere Vorderachse, wobei die Federung zwischen dem Fahrzeug (Aufbau 2) und der Achse (3) sperrbar ist, **dadurch gekennzeichnet,** daß die Federung zumindest einen Stellzylinder (1) und zumindest einen mit diesem in Wirkverbindung stehenden Druckspeicher (7) aufweist und daß Mittel zur Dämpfung der Federbewegung der Achse (3) vorgesehen sind.

2. Fahrzeug nach Anspruch 1,
**dadurch gekennzeichnet,** daß als Mittel zur Dämpfung ein zwischen dem Stellzylinder (1) und dem Druckspeicher (7) angeordnetes Drosselventil (9) vorgesehen ist.

3. Fahrzeug nach Anspruch 2,
**dadurch gekennzeichnet,** daß das Drosselventil (9) steuer- oder regelbar, insbesondere elektromagnetisch steuer- oder regelbar ist.

4. Fahrzeug nach einem der vorhergehenden Ansprüche,
**dadurch gekennzeichnet,** daß ein Sensor (12) zur Erfassung der Bewegung der Achse (3) vorgesehen ist, der mit einer Steuereinheit (11) in Verbindung steht, die das Drosselventil (9) steuert oder regelt.

5. Fahrzeug nach einem der vorhergehenden Ansprüche,
**dadurch gekennzeichnet,** daß der Stellzylinder (1) als Hydraulikzylinder ausgebildet ist, dessen Druckraum (5) über das Drosselventil (9) mit dem Druckspeicher (7) verbunden ist.

6. Fahrzeug nach einem der vorhergehenden Ansprüche,
**dadurch gekennzeichnet,** daß Mittel zur Sperrung des Stellzylinders (1) oder zur Leerung dessen Druckraumes (5) vorgesehen sind.

7. Fahrzeug nach einem der vorhergehenden Ansprüche,
**dadurch gekennzeichnet,** daß der Stellzylinder (1) einen weiteren Hydraulikraum (4) aufweist, der über eine Leckleitung (10) mit einem Reservoir (16) ggfs. unter Zwischenschaltung eines Ventiles verbunden ist.

8. Fahrzeug nach einem der vorhergehenden Ansprüche,
**dadurch gekennzeichnet,** daß der Stellzylinder (1) insbesondere der Druckraum (5) des Stellzylinders (1) befüllbar ist.

9. Fahrzeug nach einem der vorhergehenden Ansprüche,
**dadurch gekennzeichnet,** daß der Druckspeicher (7) eine Druckvorspannung (8) (Gasvorspannung, insbesondere Stickstoff) aufweist, die konstant oder veränderbar ist.